# EUROPÄISCHE PATENTSCHRIFT

(11) **EP 3 297 919 B1**
(45) Veröffentlichungstag und Bekanntmachung des Hinweises auf die Patenterteilung: **23.08.2023**
(21) Anmeldenummer: 16734278.1
(22) Anmeldetag: 28.06.2016
(51) Int. Cl.: B64D 27/24, B64D 35/02, B64D 27/02

(54) **SYSTEM ZUM BEREITSTELLEN VON KINETISCHER ENERGIE FÜR EIN ANTRIEBSSYSTEM EINES LUFTFAHRZEUGS**
SYSTEM FOR PROVIDING KINETIC ENERGY FOR A DRIVE SYSTEM OF AN AIRCRAFT
SYSTÈME PERMETTANT DE DÉLIVRER DE L'ÉNERGIE CINÉTIQUE À UN SYSTÈME D'ENTRAÎNEMENT D'UN AÉRONEF

(30) Priorität: 13.07.2015 DE 102015213026
(43) Veröffentlichungstag der Anmeldung: 28.03.2018
(73) Patentinhaber: Rolls-Royce Deutschland Ltd & Co KG, 15827 Blankenfelde-Mahlow (DE)
(72) Erfinder: BARTH, Peter, 90425 Nürnberg (DE); BRAUN, Klaus, 91074 Herzogenaurach (DE); DÜNSBIER, Stefan, 93051 Regensburg (DE)
(86) Internationale Anmeldenummer: PCT/EP2016/065031
(87) Internationale Veröffentlichungsnummer: WO 2017/009037

(56) Entgegenhaltungen:
- EP-A1- 2 327 625
- EP-A2- 1 712 761
- EP-A2- 2 404 775
- WO-A1-2014/067506
- WO-A1-2015/075538
- DE-A1-102007 017 332
- US-A1- 2009 131 215

## Beschreibung

Die Erfindung betrifft ein System zur Bereitstellung kinetischer Energie für ein Antriebssystem eines Luftfahrzeugs.

EP2327625A1 beschreibt eine Antriebseinrichtung, mit einer einzigen Verbrennungskraftmaschine sowie mit einem Hauptgetriebe, das geeignet ist, den Rotor eines Hubschraubers anzutreiben, und einem Heckgetriebe ausgerüstet ist, das geeignet ist, einen Heckrotor eines Hubschraubers anzutreiben.

Die dort gezeigte Antriebseinrichtung weist einen ersten Elektromotor auf, der mechanisch mit dem Hauptgetriebe verbunden ist, um das Hauptgetriebe in Gang setzen zu können, und einen zweiten Elektromotor, der mechanisch mit dem Heckgetriebe verbunden ist, um das Heckgetriebe in Gang setzen zu können.

EP2404775A2 beschreibt ein Flugzeug mit einem Hauptverbrennungsmotor, z.B. Ölmotor, und einer elektrischen Hilfsmaschine, die mechanisch mit einem Antriebsstrang gekoppelt sind. Der dort beschriebene Antriebsstrang treibt einen Hauptrotor einer Hybridmotoranordnung drehend an. Die Hybridmotorisierungsanordnung umfasst ein Hybridisierungssystem mit einem elektrischen Hilfsverdrahtungssystem.

WO2015075538 A1 offenbart einen sich bewegenden Körper, der ein Rad zur Bodenbewegung, einen Drehflügel, einen Motor, einen ersten Motorgenerator, einen zweiten Motorgenerator und eine Batterie umfasst.

US2009/131215A1 offenbart eine Antriebskraftabgabevorrichtung mit einer Steuerung, die eine Obergrenze der Leistung einstellt, die von einem Hilfsgerät verbraucht werden darf, basierend auf mindestens einer Referenzleistungsspeichermenge, die der Referenz des Bereichs entspricht, in dem die Leistungsspeichermenge einer Leistungsspeicherung überwacht wird und einen Leistungsgenerator, einen Elektromotor und das Hilfsgerät derart steuert, dass eine Antriebskraft, die einer Zielantriebskraft entspricht, an eine Antriebswelle abgegeben wird, während die von dem Hilfsgerät verbrauchte Leistung kleiner oder gleich der Obergrenze bleibt.

Zum Antrieb von Luftfahrzeugen werden häufig einfache oder auch doppelte Verbrennungskraftmaschinen bzw. Verbrennungsmotoren eingesetzt. Zu Versuchs- und Demonstratorzwecken werden vereinzelt auch seriell-hybride und teils parallel-hybride Konzepte angewendet. Konventionelle seriell-hybride und parallel-hybride Antriebssysteme müssen eine hohe Ausfallsicherheit gewährleisten und darüber hinaus für einen effizienten Betrieb insbesondere bzgl. Gewicht und Leistung die Performance konventioneller Antriebe gewährleisten. Hierzu werden in der Regel Redundanzen in den Hybridsystemen vorgesehen, um eine hohe Sicherheit zu gewährleisten. Diese Redundanzen wiederum bedingen ein Maß an Komplexität, welches zum Einen steuerungstechnisch schwer zu beherrschen ist und zum Anderen das Ziel der erhöhten Sicherheit gefährdet, da mit der Komplexität auch die Gefahr von Fehlfunktionen oder Ausfällen von Komponenten des Systems steigt.

Es ist daher eine Aufgabe der Erfindung, einen Ansatz für ein hinsichtlich der Betriebssicherheit verbessertes Antriebssystem für ein Luftfahrzeug bereitzustellen.

Diese Aufgabe wird durch das in Anspruch 1 beschriebene System sowie durch die in Anspruch 12 beschriebene Verwendung eines solchen Systems gelöst. Die Unteransprüche beschreiben vorteilhafte Ausgestaltungen.

Das System weist eine Vielzahl von Komponenten auf und ist zum Bereitstellen von kinetischer Energie für ein Antriebssystem, bspw. ein linker und ein rechter Propeller, eines Luftfahrzeugs eingerichtet. Die Vielzahl von Komponenten umfasst zumindest eine jeweils wahlweise als Generator oder als Elektromotor betreibbare erste und zweite elektrische Maschine, eine HV-Batterie zum Bereitstellen von elektrischer Energie und einen Verbrennungsmotor zum Bereitstellen von kinetischer Energie. Dabei sind die erste und die zweite elektrische Maschine jeweils mechanisch mit dem Antriebssystem verbindbar, um dem Antriebssystem bedarfsweise zumindest einen Teil der kinetischen Energie bereitzustellen. Die zweite elektrische Maschine ist elektrisch mit der ersten elektrischen Maschine verbunden, um der ersten elektrische Maschine bedarfsweise elektrische Energie bereitzustellen. Die zweite elektrische Maschine ist elektrisch mit der HV-Batterie verbunden, um bedarfsweise elektrische Energie von der zweiten elektrischen Maschine zur HV-Batterie oder umgekehrt zu übertragen. Weiterhin ist die HV-Batterie elektrisch mit der ersten elektrischen Maschine verbunden ist, um der ersten elektrischen Maschine bedarfsweise elektrische Energie bereitzustellen. Der ist Verbrennungsmotor mechanisch mit dem Antriebssystem verbindbar, um dem Antriebssystem bedarfsweise zumindest einen Teil der zum Betrieb benötigten kinetischen Energie bereitzustellen. Außerdem ist der Verbrennungsmotor mechanisch mit der zweiten elektrischen Maschine verbunden, um der zweiten elektrischen Maschine bedarfsweise kinetische Energie bereitzustellen. Schließlich ist eine Steuerung vorgesehen, die in Abhängigkeit von einem Betriebszustand des Systems Flüsse kinetischer und/oder elektrischer Energie zwischen miteinander verbundenen Komponenten des Systems steuert.

Durch diese Konfiguration wir ein mehrfach redundanter Betrieb des Antriebssystems möglich.

Die erste sowie auch die zweite elektrische Maschine sind jeweils wahlweise, gesteuert durch die Steuerung, sowohl in einem Generatormodus als auch in einem Elektromotormodus betreibbar. Im Generatormodus wird eine der jeweiligen Maschine über ihre elektrische Verbindung zugeführte elektrische Energie in kinetische Energie gewandelt. Die so bereitgestellte kinetische Energie kann dann über eine mechanische Verbindung der Maschine einer dementsprechend mit der Maschine verbundenen Komponente des Systems zugeführt werden. Im Elektromotormodus wird eine der jeweiligen Maschine über ihre mechanische Verbindung zugeführte kinetische Energie in elektrische Energie gewandelt. Die so bereitgestellte elektrische Energie kann dann über eine elektrische Verbindung der Maschine einer dementsprechend mit der Maschine verbundenen Komponente des Systems zugeführt werden.

Die Vielzahl von Komponenten kann weiterhin eine Hauptbatterie zur Versorgung von weiteren elektrischen Verbrauchern, bspw. ein Bordnetz, des Luftfahrzeugs umfassen, wobei die Hauptbatterie elektrisch mit der HV-Batterie und/oder der zweiten elektrischen Maschine verbunden ist, um ein Aufladen der Hauptbatterie zu ermöglichen.

Die elektrische Energie der Hauptbatterie kann in bestimmten Situationen ebenfalls zur Bereitstellung der kinetischen Energie für das Antriebssystem verwendet werden.

In einem ersten Notfallbetrieb, in dem eine oder mehrere der Komponenten fehlerhaft arbeiten, steuert die Steuerung das System derart, dass die erste und/oder die zweite elektrische Maschine als Elektromotor arbeitet, d.h. im Elektromotormodus, und dass die Hauptbatterie der als Elektromotor arbeitenden elektrischen Maschine elektrische Energie zuführt und die von der Hauptbatterie zugeführte elektrische Energie in der jeweiligen elektrischen Maschine in kinetische Energie gewandelt wird. Dabei ist jede der als Elektromotor arbeitenden elektrischen Maschinen mechanisch mit dem Antriebssystem verbindbar und die jeweils gewandelte kinetische Energie ist über die mechanischen Verbindungen dem Antriebssystem zuführbar. Hiermit wird also gewährleistet, dass das Antriebssystem und damit das Luftfahrzeug im ersten Notfallbetrieb weiterhin weitestgehend sicher betrieben werden kann.

Das System wird also in einem Verfahren gemäß dem ersten Notfallbetrieb so betrieben bzw gesteuert, dass die erste und/oder die zweite elektrische Maschine als Elektromotor arbeiten. Die Hauptbatterie führt der als Elektromotor arbeitenden elektrischen Maschine elektrische Energie zu und die von der Hauptbatterie zugeführte elektrische Energie wird in der jeweiligen elektrischen Maschine in kinetische Energie gewandelt. Dabei wird jede der als Elektromotor arbeitenden elektrischen Maschinen mechanisch mit dem Antriebssystem verbunden und die jeweils gewandelte kinetische Energie wird über die mechanischen Verbindungen dem Antriebssystem zugeführt, insbesondere dem linken und/oder rechten Propeller.

In einem zweiten Notfallbetrieb mit fehlerhafter Hauptbatterie ist die Steuerung eingerichtet, um das System derart zu steuern, dass ein Bordnetz des Luftfahrzeugs aus der HV-Batterie und/oder mit der als Generator arbeitenden zweiten elektrischen Maschine mit elektrischer Energie versorgt wird. Hiermit wird gewährleistet, dass das Antriebssystem und damit das Luftfahrzeug im zweiten Notfallbetrieb weiterhin weitestgehend sicher betrieben werden kann.

Das System wird also in einem Verfahren gemäß dem zweiten Notfallbetrieb so betrieben bzw gesteuert, dass das Bordnetz des Luftfahrzeugs aus der HV-Batterie und/oder mit der in diesem Fall als Generator arbeitenden zweiten elektrischen Maschine mit elektrischer Energie versorgt wird.

In einem dritten Notfallbetrieb mit fehlerhafter HV-Batterie, bspw. bei Ausfall oder Totalentladung der Batterie, ist die Steuerung eingerichtet, um das System derart zu steuern, dass ein erster Anteil der von dem Verbrennungsmotor bereitgestellten Leistung bzw. kinetischen Energie an das Antriebssystem übertragbar ist, dass ein zweiter Anteil der von dem Verbrennungsmotor bereitgestellten Leistung bzw. kinetischen Energie an die zweite elektrische Maschine übertragen wird, und dass die zweite elektrische Maschine als Generator arbeitet und dabei die vom Verbrennungsmotor an die zweite elektrische Maschine übertragene kinetische Energie in elektrische Energie wandelt und diese bereitstellt. Dabei wird die von der zweiten elektrischen Maschine bereitgestellte elektrische Energie der ersten elektrischen Maschine zugeführt, wobei die erste elektrische Maschine als Elektromotor arbeitet und dabei die von der zweiten elektrischen Maschine zugeführte elektrische Energie in kinetische Energie wandelt, die dem Antriebssystem zuführbar ist. Hiermit wird also gewährleistet, dass das Antriebssystem und damit das Luftfahrzeug im dritten Notfallbetrieb weiterhin weitestgehend sicher betrieben werden kann.

Das System wird also in einem Verfahren gemäß dem dritten Notfallbetrieb so betrieben bzw. gesteuert, dass ein erster Anteil der von dem Verbrennungsmotor bereitgestellten Leistung bzw. kinetischen Energie an das Antriebssystem übertragen wird, insbesondere an den zweiten bzw. rechten Propeller. Ein zweiter Anteil der von dem Verbrennungsmotor bereitgestellten Leistung bzw. kinetischen Energie wird an die zweite elektrische Maschine übertragen. Die zweite elektrische Maschine arbeitet als Generator und wandelt dabei die vom Verbrennungsmotor an die die zweite elektrische Maschine übertragene kinetische Energie in elektrische Energie. Diese wird zur weiteren Nutzung bereitgestellt, wobei die von der zweiten elektrischen Maschine bereitgestellte elektrische Energie der ersten elektrischen Maschine zugeführt wird. Die erste elektrische Maschine arbeitet als Elektromotor und wandelt die von der zweiten elektrischen Maschine zugeführte elektrische Energie in kinetische Energie. Diese wird schließlich dem Antriebssystem zugeführt, insbesondere dem ersten bzw. linken Propeller.

In einem vierten Notfallbetrieb mit fehlerhafter erster elektrischer Maschine ist die Steuerung eingerichtet, um das System derart zu steuern, dass die von dem Verbrennungsmotor bereitgestellte Leistung bzw. kinetische Energie abgesehen von unvermeidlichen Verlusten vollständig an das Antriebssystem übertragbar ist, d.h. der Verbrennungsmotor treibt direkt den zweiten Propeller, während die zweite elektrische Maschine nicht mit kinetischer Energie aus dem Verbrennungsmotor versorgt wird. So kann sichergestellt werden, dass das Luftfahrzeug trotz des Ausfalls der ersten elektrischen Maschine und trotz des damit verbundenen Verlusts eines Teils der Leitung für das Antriebssystem weiter betrieben werden kann und somit zumindest eine sichere Landung gewährleistet wird.

Das System wird also in einem Verfahren gemäß dem vierten Notfallbetrieb so betrieben bzw. gesteuert, dass die von dem Verbrennungsmotor bereitgestellte Leistung bzw. kinetische Energie vollständig an das Antriebssystem übertragbar ist, insbesondere an den zweiten bzw. rechten Propeller.

In einem fünften Notfallbetrieb mit fehlerhafter zweiter elektrischer Maschine ist die Steuerung eingerichtet ist, um das System, derart zu steuern, dass die von dem Verbrennungsmotor bereitgestellte Leistung bzw. kinetische Energie vollständig an das Antriebssystem übertragbar ist, d.h. der Verbrennungsmotor treibt direkt den zweiten Propeller und die zweite elektrische Maschine wird nicht mit kinetischer Energie aus dem Verbrennungsmotor versorgt, und dass eine von der HV-Batterie bereitgestellte Leitung bzw. elektrische Energie vollständig der ersten elektrischen Maschine zugeführt wird, wobei die erste elektrische Maschine als Elektromotor arbeitet und dabei die von der HV-Batterie zugeführte elektrische Energie in kinetische Energie wandelt, die dem Antriebssystem zuführbar ist.

Hiermit wird also gewährleistet, dass das Antriebssystem und damit das Luftfahrzeug im fünften Notfallbetrieb weiterhin weitestgehend sicher betrieben werden kann.

Das System wird also in einem Verfahren gemäß dem fünften Notfallbetrieb so betrieben bzw. gesteuert, dass die von dem Verbrennungsmotor bereitgestellte Leistung bzw. kinetische Energie vollständig an das Antriebssystem übertragen wird. Die von der HV-Batterie bereitgestellte Leitung bzw. elektrische Energie wird vollständig der ersten elektrischen Maschine zugeführt. Dabei arbeitet die erste elektrische Maschine als Elektromotor und wandelt dabei die von der HV-Batterie zugeführte elektrische Energie in kinetische Energie. Diese wird dem Antriebssystem zugeführt, insbesondere dem ersten bzw. linken Propeller.

In einem sechsten Notfallbetrieb mit fehlerhaftem Verbrennungsmotor ist die Steuerung eingerichtet, um das System, derart zu steuern, dass ein Teil der von der HV-Batterie bereitgestellten elektrischen Energie der ersten elektrischen Maschine zugeführt wird, wobei die erste elektrische Maschine als Elektromotor arbeitet und dabei die von der HV-Batterie zugeführte elektrische Energie in kinetische Energie wandelt, die dem Antriebssystem zuführbar ist, und dass ein weiterer Teil der von der HV-Batterie bereitgestellten elektrischen Energie der zweiten elektrischen Maschine zugeführt wird, wobei die zweite elektrische Maschine als Elektromotor arbeitet und dabei die von der HV-Batterie zugeführte elektrische Energie in kinetische Energie wandelt, die dem Antriebssystem zuführbar ist.

Hiermit wird also gewährleistet, dass das Antriebssystem und damit das Luftfahrzeug im sechsten Notfallbetrieb weiterhin weitestgehend sicher betrieben werden kann.

Das System wird also in einem Verfahren gemäß dem sechsten Notfallbetrieb so betrieben bzw. gesteuert, dass ein Teil der von der HV-Batterie bereitgestellten elektrischen Energie der ersten elektrischen Maschine zugeführt wird. Die erste elektrische Maschine arbeitet als Elektromotor und wandelt dabei die von der HV-Batterie zugeführte elektrische Energie in kinetische Energie. Diese wird dem Antriebssystem zugeführt, insbesondere dem ersten bzw. linken Propeller. Außerdem wird ein weiterer Teil der von der HV-Batterie bereitgestellten elektrischen Energie der zweiten elektrischen Maschine zugeführt. Die zweite elektrische Maschine arbeitet als Elektromotor und wandelt dabei die von der HV-Batterie zugeführte elektrische Energie in kinetische Energie. Diese wird ebenfalls dem Antriebssystem zugeführt, insbesondere dem zweiten bzw. rechten Propeller.

In einem ersten Normal-Betriebszustand des Systems, in dem insbesondere ein momentaner Ladezustand QHVist der HV-Batterie zumindest einem vorgegebenen Soll-Ladezustand QHVsoll (QHVist≥QHVsoll) entspricht, ist die Steuerung eingerichtet, um das System derart zu steuern, dass ein erster Anteil der von dem Verbrennungsmotor bereitgestellten Leistung bzw. kinetischen Energie an das Antriebssystem übertragbar ist, dass ein zweiter Anteil der von dem Verbrennungsmotor bereitgestellten Leistung bzw. kinetischen Energie an die zweite elektrische Maschine übertragen wird, und dass die zweite elektrische Maschine als Generator arbeitet und dabei die vom Verbrennungsmotor an die die zweite elektrische Maschine übertragene kinetische Energie in elektrische Energie wandelt und diese bereitstellt. Dabei wird zumindest ein Teil der von der zweiten elektrischen Maschine bereitgestellten elektrischen Energie der ersten elektrischen Maschine zugeführt, wobei die erste elektrische Maschine als Elektromotor arbeitet und dabei die von der zweiten elektrischen Maschine zugeführte elektrische Energie in kinetische Energie wandelt, die dem Antriebssystem zuführbar ist. Die HV-Batterie wird in diesem Betriebszustand also nicht weiter aufgeladen, da der Ladezustand bereits dem Soll-Ladezustand von typischerweise 100% entspricht. Es kann daher die volle Leistung der zweiten elektrischen Maschine zum Antrieb der ersten elektrischen Machine verwendet werden. Damit wird auch sichergestellt, dass, abgesehen von den unvermeidlichen Verlusten, die vom Verbrennungsmotor bereitgestellte Leistung bzw. kinetische Energie vollständig dem Antriebssystem zugeführt werden kann.

Das System wird also in einem Verfahren gemäß dem ersten Normal-Betriebszustand so betrieben bzw. gesteuert, dass ein erster Anteil der von dem Verbrennungsmotor bereitgestellten Leistung bzw. kinetischen Energie an das Antriebssystem übertragen wird. Ein zweiter Anteil der von dem Verbrennungsmotor bereitgestellten Leistung bzw. kinetischen Energie wird an die zweite elektrische Maschine übertragen. Die zweite elektrische Maschine arbeitet als Generator und wandelt dabei die vom Verbrennungsmotor an die die zweite elektrische Maschine übertragene kinetische Energie in elektrische Energie. Die wird zur weiteren Verwendung bereitstellt. Zumindest ein Teil der von der zweiten elektrischen Maschine bereitgestellten elektrischen Energie wird der ersten elektrischen Maschine zugeführt. Die erste elektrische Maschine arbeitet als Elektromotor und wandelt dabei die von der zweiten elektrischen Maschine zugeführte elektrische Energie in kinetische Energie, die dem Antriebssystem zugeführt wird, insbesondere dem ersten bzw. linken Propeller.

In einem zweiten Normal-Betriebszustand des Systems, in dem ein momentaner Ladezustand QHVist der HV-Batterie niedriger ist als ein vorgegebener Soll-Ladezustand QHVsoll (QHVist<QHVsoll), ist die Steuerung eingerichtet, um das System, derart zu steuern, dass ein erster Anteil der von dem Verbrennungsmotor bereitgestellten Leistung bzw. kinetischen Energie an das Antriebssystem übertragbar ist, dass ein zweiter Anteil der von dem Verbrennungsmotor bereitgestellten Leistung bzw. kinetischen Energie an die zweite elektrische Maschine übertragen wird, und dass die zweite elektrische Maschine als Generator arbeitet und dabei die vom Verbrennungsmotor an die die zweite elektrische Maschine übertragene kinetische Energie in elektrische Energie wandelt und diese bereitstellt. Dabei wird ein Teil der von der zweiten elektrischen Maschine bereitgestellten elektrischen Energie der ersten elektrischen Maschine zugeführt, wobei die erste elektrische Maschine als Elektromotor arbeitet und dabei die von der zweiten elektrischen Maschine zugeführte elektrische Energie in kinetische Energie wandelt, die dem Antriebssystem zuführbar ist. Ein weiterer Teil der von der zweiten elektrischen Maschine bereitgestellten elektrischen Energie wird der HV-Batterie zugeführt, um den Ladezustand QHVist zu erhöhen.

Hiermit kann sichergestellt werden, dass die vom Verbrennungsmotor bereitgestellte Leistung bzw. kinetische Energie vollständig genutzt werden kann, um zum Einen das Antriebssystem mit Energie zu versorgen und um zum Anderen sicherzustellen, dass die HV-Batterie stets einen ausreichenden Ladezustand aufweist.

Das System wird also in einem Verfahren gemäß dem zweiten Normal-Betriebszustand so betrieben bzw. gesteuert, dass ein erster Anteil der von dem Verbrennungsmotor bereitgestellten Leistung bzw. kinetischen Energie an das Antriebssystem übertragen wird. Ein zweiter Anteil der von dem Verbrennungsmotor bereitgestellten Leistung bzw. kinetischen Energie wird an die zweite elektrische Maschine übertragen. Die zweite elektrische Maschine arbeitet als Generator und wandelt dabei die vom Verbrennungsmotor an die zweite elektrische Maschine übertragene kinetische Energie in elektrische Energie. Diese wird zur weiteren Verwendung bereitgestellt. Ein Teil dieser von der zweiten elektrischen Maschine bereitgestellten elektrischen Energie wird der ersten elektrischen Maschine zugeführt. Die erste elektrische Maschine arbeitet als Elektromotor und wandelt dabei die von der zweiten elektrischen Maschine zugeführte elektrische Energie in kinetische Energie. Diese wird dem Antriebssystem zugeführt, insbesondere dem ersten bzw. linken Propeller. Ein weiterer Teil der von der zweiten elektrischen Maschine bereitgestellten elektrischen Energie wird der HV-Batterie zugeführt, um deren Ladezustand QHVist zu erhöhen.

In einem Hochleistungs-Betriebszustand des Systems, in dem das Luftfahrzeug kurz- oder mittelfristig eine über die übliche Nennleistung hinausgehende Leistung benötigt, bspw. beim Starten, ist die Steuerung eingerichtet, um das System bspw. beim Starten, derart zu steuern, dass die von dem Verbrennungsmotor bereitgestellte Leistung bzw. kinetische Energie vollständig an das Antriebssystem übertragbar ist, d.h. der Verbrennungsmotor treibt direkt den zweiten Propeller und die zweite elektrische Maschine wird nicht mit kinetischer Energie aus dem Verbrennungsmotor versorgt, und dass eine von der HV-Batterie bereitgestellte Leitung bzw. elektrische Energie vollständig der ersten elektrischen Maschine zugeführt wird, wobei die erste elektrische Maschine als Elektromotor arbeitet und dabei die von der HV-Batterie zugeführte elektrische Energie in kinetische Energie wandelt, die dem Antriebssystem zuführbar ist. Das System stellt also kurzfristig nahezu die doppelte Nennleistung zur Verfügung, ohne dass der Verbrennungsmotor hierfür ausgelegt sein muss.

Das System wird also in einem Verfahren gemäß dem Hochleistungs-Betriebszustand so betrieben bzw. gesteuert, dass die von dem Verbrennungsmotor bereitgestellte Leistung bzw. kinetische Energie vollständig an das Antriebssystem übertragen wird, insbesondere an den zweiten bzw. rechten Propeller. Eine von der HV-Batterie bereitgestellte Leitung bzw. elektrische Energie wird vollständig der ersten elektrischen Maschine zugeführt. Die erste elektrische Maschine arbeitet als Elektromotor und wandelt dabei die von der HV-Batterie zugeführte elektrische Energie in kinetische Energie, die dem Antriebssystem zuführbar ist, insbesondere dem ersten bzw. linken Propeller.

In einem Rekuperationsbetrieb des Systems, bspw. während eines längeren Sinkfluges des Luftfahrzeugs, ist die Steuerung eingerichtet, um das System derart zu steuern, dass die erste und die zweite elektrische Maschine jeweils als Generator arbeiten. Dabei ist eine kinetische Energie zum Antreiben der Generatoren aus dem Antriebssystem des Luftfahrzeugs zuführbar. Die aus dem Antriebssystem zugeführte kinetische Energie wird von den Generatoren in elektrische Energie gewandelt und bereitgestellt und die bereitgestellte elektrische Energie wird der HV-Batterie und/oder der Hauptbatterie zugeführt.

Das System wird also in einem Verfahren gemäß dem Rekuperationsbetrieb so betrieben bzw. gesteuert, dass die erste und die zweite elektrische Maschine jeweils als Generator arbeiten. Eine kinetische Energie zum Antreiben der Generatoren wird aus dem Antriebssystem des Luftfahrzeugs zugeführt. Insbesondere liefert der erste bzw. linke Propeller die kinetische Energie für die erste elektrische Maschine und der zweite bzw. rechte Propeller liefert die kinetische Energie für die zweite elektrische Maschine. Die aus dem Antriebssystem zugeführte kinetische Energie wird von den Generatoren in elektrische Energie gewandelt und bereitgestellt. Die bereitgestellte elektrische Energie wird der HV-Batterie und/oder der Hauptbatterie zugeführt, um sie ggf. aufzuladen.

Wie bereits angedeutet ist die erste elektrische Maschine mechanisch mit einem ersten Propeller des Antriebssystems verbunden und die zweite elektrische Maschine sowie der Verbrennungsmotor sind mit einem zweiten Propeller des Antriebssystems verbunden.

Vorteilhafterweise wird das beschriebene System verwendet, um kinetische Energie für ein Antriebssystem eines Luftfahrzeugs bereitzustellen.

Das hier vorgestellte Konzept offenbart eine Vielzahl von Vorteilen. Es ergibt sich eine höhere Redundanz und damit Sicherheit gegenüber bisherigen seriell-hybriden Antrieben oder gar reinen Verbrennungsantrieben. Weiterhin kann das System modulweise realisiert werden. Da die HV-Batterie genutzt werden kann, um über die übliche Nennleistung hinausgehende Leistungsanforderungen zu realisieren, kann der Verbrennungsmotor kleiner und damit sowohl leichter als auch kostengünstiger ausgeführt werden. Zudem kann der Verbrennungsmotor stets im Wirkungsgradoptimum betrieben werden. Da es also lediglich einen Arbeitspunkt gibt, ist eine sehr einfache Steuerung des Verbrennungsmotors möglich.

Im Folgenden werden die Erfindung und beispielhafte Ausführungsformen anhand einer Zeichnung näher erläutert.

Es zeigen:
- FIG 1: ein System zur Bereitstellung von kinetischer Energie für eine Antriebssystem eines Luftfahrzeugs in ei9ner Konfiguration für einen ersten und einen zweiten Normalbetrieb,
- FIG 2: das System in einer Konfiguration für einen Rekuperationsbetrieb,
- FIG 3: das System in einer Konfiguration für einen ersten Notfallbetrieb,
- FIG 4: das System in einer Konfiguration für einen zweiten Notfallbetrieb,
- FIG 5: das System in einer Konfiguration für einen dritten Notfallbetrieb,
- FIG 6: das System in einer Konfiguration für einen vierten Notfallbetrieb,
- FIG 7: das System in einer Konfiguration für einen fünften Notfallbetrieb,
- FIG 8: das System in einer Konfiguration für einen sechsten Notfallbetrieb,

Gleiche Bezugszeichen in verschiedenen Figuren kennzeichnen gleiche Komponenten.

Im Folgenden soll mit einer mechanischen Verbindung zweier Komponenten eine Verbindung gemeint sein, die die Übertragung von kinetischer Energie, bspw. Rotationsenergie, von einer der Komponenten an die andere erlaubt. Dementsprechend erlaubt eine elektrische Verbindung zweier Komponenten die Übertragung elektrischer Energie von einer Komponente zur anderen. Im Falle der mechanischen Verbindung können die Komponenten bspw. ein Verbrennungsmotor, der eine Rotation einer Welle bewirkt, und ein elektrischer Generator sein. Diese Komponenten sind mechanisch miteinander verbunden und die so vom Motor an den Generator übertragene kinetische Energie wird im Generator in elektrische Energie umgewandelt. Dieser Generator kann nun seinerseits elektrisch bspw. mit einer Batterie verbunden sein, um die erzeugte elektrische Energie in die Batterie einzuspeisen und dort zu speichern. Die Batterie ist konsequenterweise elektrisch mit einem Elektromotor verbunden, um dem Elektromotor elektrische Energie zur Verfügung zu stellen, die dieser in Bewegungsenergie umwandelt.

Es versteht sich von selbst, dass bei der Wandlung von einer Energieform in eine andere Energieform Verluste auftreten. Ebenso muss von Verlusten ausgegangen werden, wenn Energie von einer Komponente zu einer anderen Komponente übertragen wird. Nichtsdestotrotz wird im Rahmen der Erfindung davon gesprochen, dass eine erste Energieform, bspw. kinetische Energie, in eine zweite Energieform, bspw. elektrische Energie, gewandelt wird bzw. dass Energie von einer Komponente zu einer anderen Komponente übertragen wird, ohne dass dabei die unvermeidlichen Verluste explizit erwähnt werden. Gemeint ist natürlich, dass jeweils "zumindest ein Teil" der Energie gewandelt bzw. übertragen wird.

In den Figuren sind mechanische Verbindungen mit durchgezogenen Pfeilen gekennzeichnet, wobei die Pfeile selbst die Richtung angeben, in der die kinetische Energie transportiert wird. Elektrische Verbindungen sind mit Pfeilen mit gestrichelten Linien gekennzeichnet. Auch hier gibt der Pfeil selbst die Richtung an, in der die elektrische Energie transportiert wird.

Weiterhin können die im Rahmen der Erfindung eingesetzten elektrischen Maschinen grundsätzlich in verschiedenen Ausführungsformen bzw. Betriebsmodi als Generator oder als Elektromotor arbeiten. Eine elektrische Maschine arbeitet als Generator bzw. im Generatormodus, wenn sie eine zugeführte kinetische Energie, bspw. Rotationsenergie von einem Motor oder - im Rekuperationsmodus- von einem Propeller, in elektrische Energie wandelt. Die elektrische Maschine arbeitet andererseits im Elektromotormodus, wenn sie umgekehrt eine zugeführte elektrische Energie in kinetische Energie wandelt, bspw. in Rotationsenergie zum Antreiben eines Propellers.

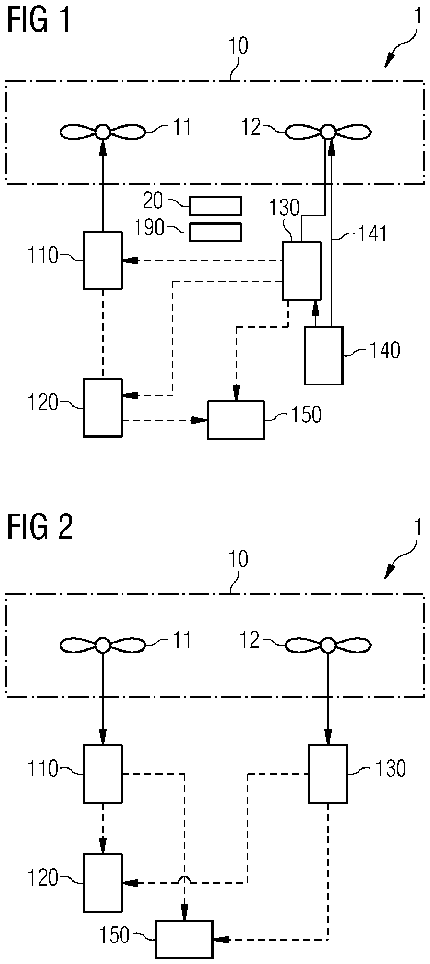

FIG 1 zeigt in schematischer Darstellung ein Luftfahrzeug 1. Das Luftfahrzeug 1 weist ein Antriebssystem 10 mit einem linksseitigen Propeller 11 und einem rechtsseitigen Propeller 12 auf. Eine dem Antriebssystem bereitgestellte kinetische Energie wird den Propellern 11, 12 zugeführt, welche die zugeführte kinetische Energie in Rotationsenergie umsetzen und so einen Antrieb des Luftfahrzeugs 1 bewirken. Grundsätzlich kann das Antriebssystem 10 natürlich über eine quasi beliebige Anzahl von Propellern verfügen und eine dem Antriebssystem 10 zugeführte kinetische Energie wird bedarfsgemäß mit Hilfe entsprechender, in der Regel mechanischer Mittel an die entsprechenden Propeller verteilt, so dass ein optimaler Antrieb des Luftfahrzeugs gewährleistet wird. Idealerweise wird die verfügbare kinetische Energie gleichmäßig auf die beiden Seiten des Luftfahrzeugs verteilt. Zur Veranschaulichung wird im Folgenden exemplarisch davon ausgegangen, dass das Antriebssystem 10 lediglich einen Propeller 11 auf der linken Seite des Luftfahrzeugs 1 und einen Propeller 12 auf der rechten Seite des Luftfahrzeugs 1 aufweist.

Das Luftfahrzeug 1 weist weiterhin ein redundant ausgelegtes System 100 mit einer Vielzahl von Komponenten auf, welches dazu dient, die kinetische Energie für das Antriebssystem 10 bereitzustellen. Die redundante Auslegung des Systems 100 gewährleistet, dass in verschiedenen Notfallsituationen, in denen verschiedene Komponenten des Systems 100 fehlerhaft arbeiten, weiterhin gewährleistet ist, dass das Antriebssystem 10 mit kinetischer Energie versorgt wird, so dass zumindest eine Landung des Luftfahrzeugs 1 möglich ist. Hier und auch an anderer Stelle kann der Begriff "fehlerhaft" bedeuten, dass die fehlerhafte Komponente aus technischen oder sonstigen Gründen nicht verfügbar ist bzw. nicht die für einen Normalbetrieb der Komponente benötigte Leistung erbringt.

In der FIG 1 sowie in den übrigen Figuren werden verschiedene Betriebsmodi des Systems 100 beschrieben, wobei jeweils lediglich die für den jeweiligen, zu beschreibenden Betriebsmodus benötigten Komponenten und Verbindungen des Systems 100 erläutert werden. Auf eine Darstellung der für den zu beschreibenden Betriebsmodus nicht zwangsläufig benötigten Komponenten wird verzichtet. Lediglich in der FIG 1 sind sämtliche Komponenten des Systems 100 dargestellt, unabhängig davon, ob sie für die im Zusammenhang mit der FIG 1 beschriebenen Betriebsmodi benötigt werden.

Die in den verschiedenen Betriebsmodi benötigten Flüsse kinetischer und/oder elektrischer Energie zwischen miteinander verbundenen Komponenten des Systems 100 werden mit Hilfe einer Steuerung 190 des Systems 100 realisiert. Die Steuerung 190 ist mit den diversen Komponenten des Systems 100 verbunden, wobei in den Figuren der Übersichtlichkeit wegen darauf verzichtet wurde, diese Verbindungen im Einzelnen darzustellen. Die Steuerung 190 kann die Komponenten derart steuern, dass die im Folgenden für die jeweiligen Betriebsmodi kennzeichnenden Verhaltensweisen des Systems 100 umgesetzt werden.

Das System 100 weist eine erste elektrische Maschine 110 auf, die mechanisch mit dem Antriebssystem 10 und insbesondere mit dem linken Propeller 11 verbunden ist, um dem Antriebssystem 10 bzw. dem linken Propeller 11 kinetische Energie bereitzustellen. Die erste elektrische Maschine 110 kann je nach Betriebsmodus des Systems 100 als Elektromotor, d.h. in einem Elektromotormodus, oder als Generator, d.h. in einem Generatormodus, betrieben werden. Weiterhin weist das System 100 eine Hochspannungsbatterie (HV-Batterie) 120 auf, die elektrisch mit der ersten elektrischen Maschine 110 verbunden ist, um die erste elektrische Maschine 110 mit elektrischer Energie zu versorgen, wenn diese als Elektromotor arbeitet.

Das System 100 weist weiterhin eine zweite elektrische Maschine 130 auf, die mechanisch mit dem Antriebssystem 10 und insbesondere mit dem rechten Propeller 12 verbunden ist, um dem Antriebssystem 10 bzw. dem rechten Propeller 12 kinetische Energie bereitzustellen. Die zweite elektrische Maschine 130 kann je nach Betriebsmodus des Systems 100 als Elektromotor, d.h. in einem Elektromotormodus, oder als Generator, d.h. in einem Generatormodus, betrieben werden.

Neben den beiden elektrischen Maschinen 110, 130, mit denen je nach Betriebsmodus der Maschinen 110, 130 kinetische Energie für das Antriebssystem 10 bereitgestellt werden kann, weist das System 100 einen Verbrennungsmotor 140 auf, der mechanisch mit der zweiten elektrischen Maschine 130 sowie auch mit dem Antriebssystem 10 bzw. mit dem rechten Propeller 12 verbunden ist. Der Verbrennungsmotor 140 stellt im Betrieb kinetische Energie zur Verfügung, die je nach Bedarf bzw. Betriebszustand des Systems 100 dem Antriebssystem 10 bzw. dem Propeller 12 und/oder der zweiten elektrischen Maschine 130 zugeführt wird.

In einem Normal-Betriebszustand des Systems 100, in dem alle Komponenten regulär, d.h. nicht fehlerhaft, arbeiten, erzeugt der Verbrennungsmotor 140 im Wirkungsgradoptimum eine vorbekannte Leistung bzw. kinetische Energie. Ein Anteil dieser Leistung wird über eine Freilaufwelle 141 direkt an den rechten Propeller 12 weiter geleitet und bewirkt, dass dieser in Rotation versetzt wird. Ein weiterer Anteil der vom Verbrennungsmotor 140 erzeugten Leistung wird der zweiten elektrischen Maschine 130 zugeführt. Die zweite elektrische Maschine 130 arbeitet im Normal-Betriebszustand als Generator und wandelt die zugeführte kinetische Energie in elektrische Energie. Die zweite elektrische Maschine 130 ist elektrisch sowohl mit der ersten elektrischen Maschine 110 als auch mit der HV-Batterie 120 verbunden und die erzeugte elektrische Energie wird je nach Betriebsbedingungen der HV-Batterie 120 und/oder der ersten elektrischen Maschine 110 bereitgestellt.

In einem ersten Normal-Betriebszustand, in dem ein momentaner Ladezustand QHVist der HV-Batterie 120 zumindest einem vorgegebenen Soll-Ladezustand QHVsoll (d.h. QHVist≥QHVsoll) entspricht, wird ein erster Anteil der von dem Verbrennungsmotor 140 bereitgestellten Leistung bzw. kinetischen Energie an das Antriebssystem 10 und den Propeller 12 übertragen. Dieser Anteil kann bspw. bei 50% liegen. Der übrige Anteil der von dem Verbrennungsmotor 140 bereitgestellten Leistung bzw. kinetischen Energie wird an die zweite elektrische Maschine 130 übertragen. Die von der als Generator arbeitenden zweiten elektrischen Maschine 130 bereitgestellte elektrische Energie wird vollständig der ersten elektrischen Maschine 110 zugeführt. Die erste elektrische Maschine 110 arbeitet im Normal-Betriebszustand als Elektromotor und wandelt die von der zweiten elektrischen Maschine 130 zugeführte elektrische Energie in kinetische Energie, die schließlich dem Antriebssystem 10 und insbesondere dem linken Propeller 11 zuführbar ist. Im ersten Normal-Betriebszustand kann die vom Verbrennungsmotor 140 bereitgestellte kinetische Energie bspw. so verteilt werden, dass 50% der Energie dem Antriebssystem 10 direkt zugeführt werden und weitere 50% über die erste elektrische Maschine 110 ebenfalls zum Antriebssystem 10 gelangen.

In einem zweiten Normal-Betriebszustand des Systems 100, in dem der momentane Ladezustand QHVist der HV-Batterie 120 niedriger ist als der vorgegebene Soll-Ladezustand QHVsoll (d.h. QHVist<QHVsoll) wird nur ein Teil der von der zweiten elektrischen Maschine 130 bereitgestellten elektrischen Energie der ersten elektrischen Maschine 110 zugeführt. Die erste elektrische Maschine 110 arbeitet wieder als Elektromotor und wandelt die zugeführte elektrische Energie in kinetische Energie, die dem Antriebssystem 10 zugeführt wird. Der verbleibende Teil der von der zweiten elektrischen Maschine 130 bereitgestellten elektrischen Energie wird der HV-Batterie 120 zugeführt, um diese so weit aufzuladen, dass deren momentaner Ladezustand zumindest dem Soll-Ladezustand entspricht. Sobald dieser Zustand erreicht ist, wird das System 100 wieder im ersten Normal-Betriebszustand betrieben. Im zweiten Normal-Betriebszustand kann die vom Verbrennungsmotor 140 bereitgestellte kinetische Energie bspw. so verteilt werden, dass 40% dem Antriebssystem 10 direkt zugeführt werden und weitere 40% über die erste elektrische Maschine 110 ebenfalls zum Antriebssystem 10 gelangen, während die verbleibenden 20% genutzt werden, um die HV-Batterie 120 zu laden.

Hiermit kann also sicher gestellt werden, dass die vom Verbrennungsmotor 140 bereitgestellte Leistung bzw. kinetische Energie vollständig genutzt werden kann, um zum Einen das Antriebssystem 10 mit Energie zu versorgen und um zum Anderen sicherzustellen, dass die HV-Batterie 120 stets einen ausreichenden Ladezustand aufweist. Die HV-Batterie 120 wird im ersten Normal-Betriebszustand nicht weiter aufgeladen, da der Ladezustand bereits dem Soll-Ladezustand von typischerweise 100% entspricht. Es kann daher die volle Leistung der zweiten elektrischen Maschine 130 zum Antrieb der ersten elektrischen Maschine 110 verwendet werden. Damit wird auch sichergestellt, dass, abgesehen von den unvermeidlichen Verlusten, die vom Verbrennungsmotor 140 bereitgestellte Leistung bzw. kinetische Energie vollständig dem Antriebssystem 10 zugeführt werden kann.

Das System 100 weist weiterhin eine Hauptbatterie 150 auf, die primär genutzt wird, um ein elektrisches Bordnetz 20 des Luftfahrzeugs 1 und die dort typischerweise enthaltenen Komponenten, mit elektrischer Energie zu versorgen. Der Begriff Bordnetz 20 steht dabei für eine oder auch mehrere elektrische Verbraucher des Luftfahrzeugs 1. Die Hauptbatterie 150 ist elektrisch mit der HV-Batterie 120 und/oder mit der zweiten elektrischen Maschine 130 verbunden, um ggf. ein Aufladen der Hauptbatterie 150 aus zumindest einer dieser elektrischen Energiequellen zu veranlassen.

Im Normal-Betriebszustand sind zumindest drei verschiedene Modi denkbar:
Im Normalmodus erzeugt der Verbrennungsmotor 140 wie schon beschrieben eine Nominalleistung, die über die Freilaufwelle 141 einerseits und über die zweite und erste elektrische Maschine 130, 110 andererseits zu jeweils 50% auf den linken und den rechten Propeller 11, 12 aufgeteilt wird. Gegebenenfalls werden bspw. 20% der Nominalleistung verwendet, um die HV-Batterie 120 zu laden. In diesem Fall steht den Propellern 11, 12 jeweils 40% der Nominalleistung zur Verfügung.

In einem Hochleistungsmodus, in dem das Luftfahrzeug 1 bspw. kurz- oder mittelfristig eine über die übliche Nennleistung hinausgehende Leistung benötigt, bspw. beim Starten, erzeugt der Verbrennungsmotor 140 weiterhin Nominalleistung, die Steuerung 190 ist aber so eingerichtet, dass 100% der Leistung des Verbrennungsmotors 140 direkt dem Antriebssystem 10 und dem rechten Propeller 12 zur Verfügung gestellt wird. Gleichzeitig arbeitet die erste elektrische Maschine 110 als Elektromotor und stellt die dabei bereitgestellte kinetische Energie dem Antriebssystem 10 und dem Propeller 11 zur Verfügung. Die hierzu benötigte elektrische Energie wird aus der HV-Batterie 120 bezogen. Dabei entspricht die Leistung der ersten elektrischen Maschine 110 der Leistung des Verbrennungsmotors 140. Die hier erzeugte Gesamtleistung entspricht also dem doppelten der dauerhaften Nennleistung des Verbrennungsmotors 140.

In einem Rekuperationsbetrieb, der in der FIG 2 dargestellt ist, arbeiten die erste 110 und die zweite elektrische Maschine 130 jeweils als Generator. Die jeweils benötigte kinetische Energie zum Antreiben der Generatoren 110, 130 wird aus dem Antriebssystem 10 des Luftfahrzeugs 1 zugeführt, d.h. die Propeller 11, 12 treiben die erste 110 und die zweite elektrische Maschine 130 an. Diese aus dem Antriebssystem 10 zugeführte kinetische Energie wird von den Generatoren 110, 130 in elektrische Energie gewandelt und bereitgestellt. Die somit bereitgestellte elektrische Energie wird der HV-Batterie 120 und/oder der Hauptbatterie 150 zugeführt, um diese bedarfsweise aufzuladen. Das System 100 kann bspw. während eines Sinkfluges des Luftfahrzeugs 1 im Rekuperationsmodus betrieben werden.

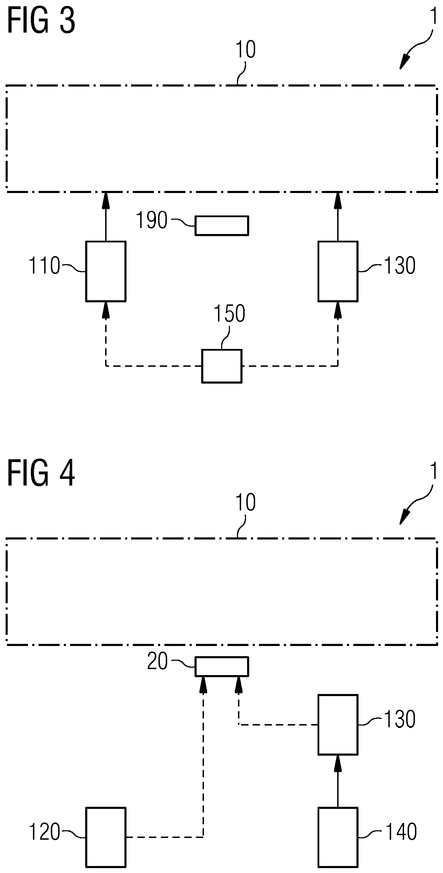

In einem ersten Notfallbetrieb des Systems 100, dessen Konfiguration in der FIG 3 dargestellt ist und in dem allgemein eine oder auch mehrere der Komponenten des Systems 100 fehlerhaft arbeiten, wirkt die Steuerung 190 derart, dass die erste 110 und/oder die zweite elektrische Maschine 130 als Elektromotor arbeitet, d.h. im Elektromotormodus. Die Hauptbatterie 150 hat die Funktion einer Notfallbatterie und führt der als Elektromotor arbeitenden elektrischen Maschine 110, 130 elektrische Energie zu. Diese von der Hauptbatterie 150 zugeführte elektrische Energie wird in der jeweiligen elektrischen Maschine 110, 130 in kinetische Energie gewandelt. Die somit gewonnene kinetische Energie wird schließlich dem Antriebsstem 10 zugeführt.

Die Haupt- bzw. Notfallbatterie 150 ist so auszulegen und das System 100 ist derart zu steuern, dass die Batterie 150 stets zu 100% geladen ist. Im normalen Betrieb ist die Hauptbatterie 150 lediglich für die Versorgung des Bordnetzes 20 zuständig, im Notfall soll sie jedoch das komplette System 100 zumindest für eine geringe Zeitspanne versorgen. Die Kapazität ist idealerweise so dimensioniert, dass zumindest eine sofortige Notlandung des Luftfahrzeugs 1 möglich ist.

In einem in der FIG 4 dargestellten zweiten Notfallbetrieb, bei dem die Hauptbatterie 150 fehlerhaft arbeitet und bspw. keine oder eine zu geringe elektrische Spannung zur Verfügung stellt, ist die Steuerung derart eingerichtet, dass das Bordnetz 20 des Luftfahrzeugs 1 aus der HV-Batterie 120 gespeist wird. Alternativ oder zusätzlich kann elektrische Energie für das Bordnetz 20 zur Verfügung gestellt werden, indem die zweite elektrische Maschine 130, gespeist durch den Verbrennungsmotor 140, als Generator arbeitet und zumindest ein Teil der dabei bereitgestellten elektrischen Energie dem Bordnetz 20 zur Verfügung gestellt wird.

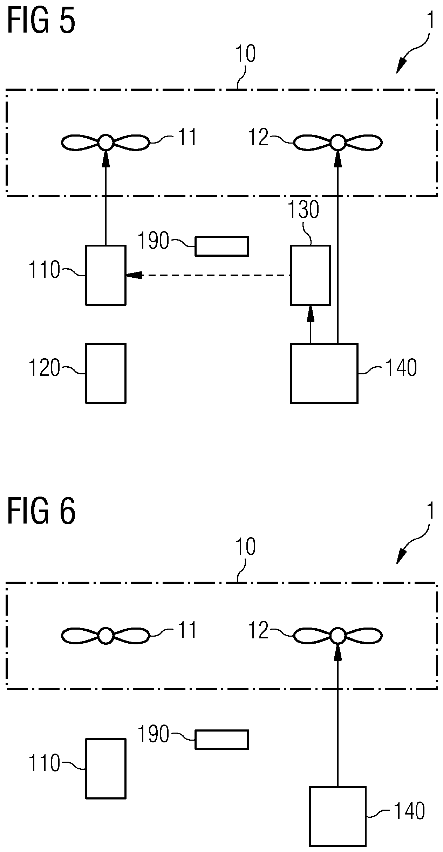

Die FIG 5 zeigt einen dritten Notfallbetrieb mit fehlerhafter HV-Batterie 120, bspw. bei Ausfall oder Totalentladung der Batterie 120. Die Steuerung 190 ist dann eingerichtet, um das System 100 derart zu steuern, dass ein erster Anteil der von dem Verbrennungsmotor 140 bereitgestellten Leistung bzw. kinetischen Energie direkt, d.h. bspw. über die Freilaufwelle 141, an das Antriebssystem 10 übertragbar ist. Ein zweiter Anteil der von dem Verbrennungsmotor 140 bereitgestellten Leistung bzw. kinetischen Energie wird an die zweite elektrische Maschine 130 übertragen, wobei die zweite elektrische Maschine 130 als Generator arbeitet und dabei die vom Verbrennungsmotor 140 übertragene kinetische Energie in elektrische Energie wandelt. Die so von der zweiten elektrischen Maschine 130 bereitgestellte elektrische Energie wird der ersten elektrischen Maschine 110 zugeführt, wobei die erste elektrische Maschine 110 als Elektromotor arbeitet und dabei die von der zweiten elektrischen Maschine 130 zugeführte elektrische Energie in kinetische Energie wandelt. Diese kinetische Energie ist schließlich dem Antriebssystem 10 und insbesondere dem linken Propeller 11 zuführbar. Die Aufteilung der vom Verbrennungsmotor 140 bereitgestellten Listung erfolgt idealerweise so, dass dem linken und dem rechten Propeller 11, 12 jeweils 50% der Leistung zugeführt werden.

In diesem Fall stellen die zweite elektrische Maschine 130 im Generatormodus und die Notfallbatterie 150 redundante Energiequellen für das System 100 dar, so dass auch bei einem zusätzlichen Ausfall einer dieser beiden Komponenten dem System 100 weiterhin eine Energiequelle zur Verfügung steht.

In einem vierten Notfallbetrieb, der in der FIG 6 dargestellt ist, wird angenommen, dass die erste elektrische Maschine 110 fehlerhaft arbeitet. Die Steuerung 190 ist eingerichtet, um in diesem Fall das System 100 derart zu steuern, dass die von dem Verbrennungsmotor 140 bereitgestellte Leistung bzw. kinetische Energie vollständig an das Antriebssystem 10 übertragbar ist, d.h. der Verbrennungsmotor 140 treibt direkt den rechten Propeller 12 und die zweite elektrische Maschine 130 wird nicht mit kinetischer Energie aus dem Verbrennungsmotor 140 versorgt. So kann sichergestellt werden, dass das Luftfahrzeug trotz des Ausfalls der ersten elektrischen Maschine 110 und trotz des damit verbundenen Verlusts eines Teils der Leitung für das Antriebssystem 10 weiter betrieben werden kann und somit zumindest eine sichere Landung gewährleistet wird.

Bei der hier beschriebenen Konfiguration fließen 100% der vom Verbrennungsmotor 140 gestellten kinetischen Energie dem rechten Propeller 12 zu. Die Redundanz der Antriebsquellen bleibt erhalten, da neben dem Verbrennungsmotor 140 auch die zweite elektrische Maschine 130 als Quelle kinetischer Energie für das Antriebssystem 10 verfügbar ist. Als redundante Energiequellen stehen die HV-Batterie 120 sowie die Hauptbatterie 150 zur Speisung der zweiten elektrischen Maschine 130 als Generator und der Verbrennungsmotor 140 zur Verfügung.

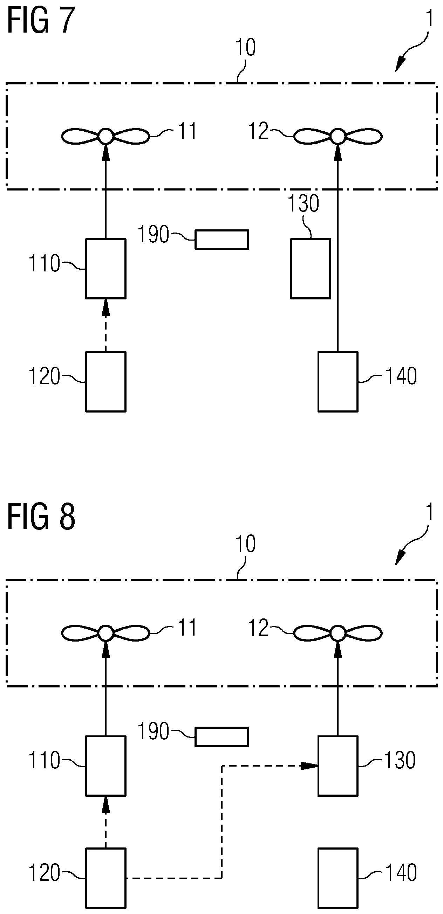

Die FIG 7 zeigt einen fünften Notfallbetrieb, bei dem die zweite elektrische Maschine 130 fehlerhaft arbeitet. Die Steuerung 190 ist in diesem Fall eingerichtet, um das System 100 derart zu steuern, dass die von dem Verbrennungsmotor 140 bereitgestellte Leistung bzw. kinetische Energie vollständig an das Antriebssystem 10 und an den rechten Propeller 12 übertragbar ist, d.h. der Verbrennungsmotor 140 treibt direkt den rechten Propeller 12 und die zweite elektrische Maschine 130 wird nicht mit kinetischer Energie aus dem Verbrennungsmotor 140 versorgt. Eine von der HV-Batterie 120 bereitgestellte Leitung bzw. elektrische Energie wird vollständig der ersten elektrischen Maschine 110 zugeführt, wobei die erste elektrische Maschine 110 als Elektromotor arbeitet und dabei die von der HV-Batterie 120 zugeführte elektrische Energie in kinetische Energie wandelt, die dem Antriebssystem 10 und dem linken Propeller 11 zuführbar ist.

In diesem Fall werden also 100% der von der HV-Batterie 120 aufgebrachten Leistung an den linken Propeller 11 übertragen, während ebenfalls 100% der vom Verbrennungsmotor 140 zur Verfügung stehenden Leistung dem rechten Propeller 12 zugeführt werden. Die Redundanz der Antriebsquellen bleibt wiederum erhalten, da die erste elektrische Maschine 110 und der Verbrennungsmotor 140 zur Verfügung stehen. Als redundante Energiequellen sind die HV-Batterie 120 und die Hauptbatterie 150 verfügbar.

In einem sechsten Notfallbetrieb, der in der FIG 8 dargestellt ist, arbeitet der Verbrennungsmotor 140 fehlerhaft. Die Steuerung 190 ist eingerichtet, um das System 100 derart zu steuern, dass ein Teil der von der HV-Batterie 120 bereitgestellten elektrischen Energie der ersten elektrischen Maschine 110 zugeführt wird, wobei die erste elektrische Maschine 110 als Elektromotor arbeitet und dabei die von der HV-Batterie 120 zugeführte elektrische Energie in kinetische Energie wandelt, die dem Antriebssystem 10 und dem linken Propeller 11 zuführbar ist. Ein weiterer Teil der von der HV-Batterie 120 bereitgestellten elektrischen Energie wird der zweiten elektrischen Maschine 130 zugeführt, wobei die zweite elektrische Maschine 130 ebenfalls als Elektromotor arbeitet und dabei die von der HV-Batterie 120 zugeführte elektrische Energie in kinetische Energie wandelt, die dem Antriebssystem 10 und dem rechten Propeller 12 zuführbar ist.

Die Aufteilung der von der HV-Batterie 120 verfügbaren Leistung erfolgt idealerweise so, dass dem linken und dme rechten Propeller jeweils 50% der Leistung zufließen. Auch hier bleibt die Redundanz der Antriebsquellen erhalten, da die erste und die zweite elektrische Maschine im Generatorbetrieb verfügbar sind. Als redundante Energiequellen steht die HV-Batterie 120 und die Hauptbatterie 150 zur Verfügung.

In sämtlichen Ausführungsformen bzw. Betriebsmodi ist es bei entsprechender technischer Auslegung des Antriebssystems 10 denkbar, die von einer oder mehreren Quellen kinetischer Energie zur Verfügung stehende Energie nicht nur zum linken bzw. rechten Propeller 11, 12 zu leiten, sondern diese kinetische Energie unter Zuhilfenahme entsprechender Kupplungen, An- bzw. Getriebe etc. dem Antriebssystem 10 generell zur Verfügung zu stellen. Durch geeignete Steuerung kann dann dafür gesorgt werden, dass die zur Verfügung stehende kinetische Energie den Propellern 11, 12 unabhängig von ihrer Quelle in beliebigen Verhältnissen zugeführt wird. Idealerweise erfolgt das so, dass die Propeller zu gleichen Teilen mit kinetischer Energie versorgt werden.

## Patentansprüche

1. System (100) mit einer Vielzahl von Komponenten (110, 120, 130, 140, 150) zum Bereitstellen von kinetischer Energie für ein Antriebssystem (10) eines Luftfahrzeugs (1), wobei die Vielzahl von Komponenten (110, 120, 130, 140, 150) zumindest umfasst:
- eine jeweils wahlweise als Generator oder als Elektromotor betreibbare erste (110) und zweite elektrische Maschine (130),
- eine HV-Batterie (120) zum Bereitstellen von elektrischer Energie,
- einen Verbrennungsmotor (140) zum Bereitstellen von kinetischer Energie,
wobei
- die erste und die zweite elektrische Maschine (110, 130) jeweils mechanisch mit dem Antriebssystem (10) verbindbar sind, um dem Antriebssystem (10) bedarfsweise kinetische Energie bereitzustellen,
- die zweite elektrische Maschine (130) elektrisch mit der ersten elektrischen Maschine (110) verbunden ist, um der ersten elektrische Maschine (110) bedarfsweise elektrische Energie bereitzustellen,
- die zweite elektrische Maschine (130) elektrisch mit der HV-Batterie (120) verbunden ist, um bedarfsweise elektrische Energie von der zweiten elektrischen Maschine (130) zur HV-Batterie (120) oder umgekehrt zu übertragen,
- die HV-Batterie (120) elektrisch mit der ersten elektrischen Maschine (110) verbunden ist,
- der Verbrennungsmotor (140) mechanisch mit dem Antriebssystem (10) verbindbar ist, um dem Antriebssystem (10) bedarfsweise kinetische Energie bereitzustellen,
- der Verbrennungsmotor (140) mechanisch mit der zweiten elektrischen Maschine (130) verbunden ist, um der zweiten elektrischen Maschine (130) bedarfsweise kinetische Energie bereitzustellen,
und wobei
- eine Steuerung (190) vorgesehen ist, um in Abhängigkeit von einem Betriebszustand des Systems (100) Flüsse kinetischer und/oder elektrischer Energie zwischen miteinander verbundenen Komponenten (110, 120, 130, 140, 150) des Systems (100) zu steuern, wobei die Steuerung (190) eingerichtet ist, um das System (100) in einem ersten Normal-Betriebszustand, in dem ein momentaner Ladezustand QHVist der HV-Batterie (120) zumindest einem vorgegebenen Soll-Ladezustand QHVsoll (QHVist≥QHVsoll) entspricht, derart zu steuern, dass
- ein erster Anteil der von dem Verbrennungsmotor (140) bereitgestellten kinetischen Energie an das Antriebssystem (10) übertragbar ist,
- ein zweiter Anteil der von dem Verbrennungsmotor (140) bereitgestellten kinetischen Energie an die zweite elektrische Maschine (130) übertragen wird,
- die zweite elektrische Maschine (130) als Generator arbeitet und dabei die vom Verbrennungsmotor (140) übertragene kinetische Energie in elektrische Energie wandelt und diese bereitstellt,
wobei
- zumindest ein Teil der von der zweiten elektrischen Maschine (130) bereitgestellten elektrischen Energie der ersten elektrischen Maschine (110) zugeführt wird, wobei die erste elektrische Maschine (110) als Elektromotor arbeitet und dabei die von der zweiten elektrischen Maschine (130) zugeführte elektrische Energie in kinetische Energie wandelt, die dem Antriebssystem (10) zuführbar ist, **dadurch gekennzeichnet, dass**
- die erste elektrische Maschine (110) mechanisch mit einem ersten Propeller (11) des Antriebssystems (10) verbunden ist und
- die zweite elektrische Maschine (130) sowie der Verbrennungsmotor (140) mit einem zweiten Propeller (12) des Antriebssystems (10) verbunden sind.

2. System (100) nach Anspruch 1, **dadurch gekennzeichnet, dass** die Vielzahl von Komponenten (110, 120, 130, 140, 150) weiterhin eine Hauptbatterie (150) zur Versorgung von weiteren elektrischen Verbrauchern (20) des Luftfahrzeugs (1) umfasst, wobei die Hauptbatterie (150) elektrisch mit der HV-Batterie (120) und/oder der zweiten elektrischen Maschine (130) verbunden ist, um ein Aufladen der Hauptbatterie (150) zu ermöglichen.

3. System (100) nach Anspruch 2, **dadurch gekennzeichnet, dass** die Steuerung (190) eingerichtet ist, um das System (100) in einem ersten Notfallbetrieb, in dem eine oder mehrere der Komponenten (110, 120, 130, 140, 150) fehlerhaft arbeiten, derart zu steuern, dass
- die erste (110) und/oder die zweite elektrische Maschine (130) als Elektromotor arbeitet, und
- die Hauptbatterie (150) der als Elektromotor arbeitenden elektrischen Maschine (110, 130) elektrische Energie zuführt und die von der Hauptbatterie (150) zugeführte elektrische Energie in der jeweiligen elektrischen Maschine (110, 130) in kinetische Energie gewandelt wird,
wobei
- jede der als Elektromotor arbeitenden elektrischen Maschinen (110, 130) mechanisch mit dem Antriebssystem (10) verbindbar ist und die jeweils gewandelte kinetische Energie über die mechanischen Verbindungen dem Antriebssystem (10) zuführbar ist.

4. System (100) nach Anspruch 2 oder 3, **dadurch gekennzeichnet, dass** die Steuerung (190) eingerichtet ist, um das System (100) in einem zweiten Notfallbetrieb mit fehlerhafter Hauptbatterie (150) derart zu steuern, dass ein Bordnetz (20) des Luftfahrzeugs (1) aus der HV-Batterie (120) und/oder mit der als Generator arbeitenden zweiten elektrischen Maschine (130) mit elektrischer Energie versorgt wird.

5. System (100) nach einem der vorhergehenden Ansprüche, **dadurch gekennzeichnet, dass** die Steuerung (190) eingerichtet ist, um das System (100) in einem dritten Notfallbetrieb mit fehlerhafter HV-Batterie (120) derart zu steuern, dass
- ein erster Anteil der von dem Verbrennungsmotor (140) bereitgestellten kinetischen Energie an das Antriebssystem (10) übertragbar ist,
- ein zweiter Anteil der von dem Verbrennungsmotor (140) bereitgestellten kinetischen Energie an die zweite elektrische Maschine (130) übertragen wird,
- die zweite elektrische Maschine (130) als Generator arbeitet und dabei die vom Verbrennungsmotor (140) übertragene kinetische Energie in elektrische Energie wandelt und diese bereitstellt,
wobei
- die von der zweiten elektrischen Maschine (130) bereitgestellte elektrische Energie der ersten elektrischen Maschine (110) zugeführt wird, wobei die erste elektrische Maschine (110) als Elektromotor arbeitet und dabei die von der zweiten elektrischen Maschine (130) zugeführte elektrische Energie in kinetische Energie wandelt, die dem Antriebssystem (10) zuführbar ist.

6. System (100) nach einem der vorhergehenden Ansprüche, **dadurch gekennzeichnet, dass** die Steuerung (190) eingerichtet ist, um das System (100) in einem vierten Notfallbetrieb mit fehlerhafter erster elektrischer Maschine (110) derart zu steuern, dass die von dem Verbrennungsmotor (140) bereitgestellte kinetische Energie vollständig an das Antriebssystem (10) übertragbar ist.

7. System (100) nach einem der vorhergehenden Ansprüche, **dadurch gekennzeichnet, dass** die Steuerung (190) eingerichtet ist, um das System (100) in einem fünften Notfallbetrieb mit fehlerhafter zweiter elektrischer Maschine (130) derart zu steuern, dass
- die von dem Verbrennungsmotor (140) bereitgestellte kinetische Energie vollständig an das Antriebssystem (10) übertragbar ist,
- eine von der HV-Batterie (120) bereitgestellte elektrische Energie vollständig der ersten elektrischen Maschine (110) zugeführt wird, wobei die erste elektrische Maschine (110) als Elektromotor arbeitet und dabei die von der HV-Batterie (120) zugeführte elektrische Energie in kinetische Energie wandelt, die dem Antriebssystem (10) zuführbar ist.

8. System (100) nach einem der vorhergehenden Ansprüche, **dadurch gekennzeichnet, dass** die Steuerung (190) eingerichtet ist, um das System (100) in einem sechsten Notfallbetrieb mit fehlerhaftem Verbrennungsmotor (140) derart zu steuern, dass
- ein Teil der von der HV-Batterie (120) bereitgestellten elektrischen Energie der ersten elektrischen Maschine (110) zugeführt wird, wobei die erste elektrische Maschine (110) als Elektromotor arbeitet und dabei die von der HV-Batterie (120) zugeführte elektrische Energie in kinetische Energie wandelt, die dem Antriebssystem (10) zuführbar ist, und
- ein weiterer Teil der von der HV-Batterie (120) bereitgestellten elektrischen Energie der zweiten elektrischen Maschine (130) zugeführt wird, wobei die zweite elektrische Maschine (130) als Elektromotor arbeitet und dabei die von der HV-Batterie (120) zugeführte elektrische Energie in kinetische Energie wandelt, die dem Antriebssystem (10) zuführbar ist.

9. System (100) nach einem der vorhergehenden Ansprüche,
**dadurch gekennzeichnet, dass** die Steuerung (190) eingerichtet ist, um das System (100) in einem zweiten Normal-Betriebszustand, in dem ein momentaner Ladezustand QHVist der HV-Batterie (120) niedriger ist als ein vorgegebener Soll-Ladezustand QHVsoll (QHVist<QHVsoll), derart zu steuern, dass
- ein erster Anteil der von dem Verbrennungsmotor (140) bereitgestellten kinetischen Energie an das Antriebssystem (10) übertragbar ist,
- ein zweiter Anteil der von dem Verbrennungsmotor (140) bereitgestellten kinetischen Energie an die zweite elektrische Maschine (130) übertragen wird,
- die zweite elektrische Maschine (130) als Generator arbeitet und dabei die vom Verbrennungsmotor (140) übertragene kinetische Energie in elektrische Energie wandelt und diese bereitstellt,
wobei
- ein Teil der von der zweiten elektrischen Maschine (130) bereitgestellten elektrischen Energie der ersten elektrischen Maschine (110) zugeführt wird, wobei die erste elektrische Maschine (110) als Elektromotor arbeitet und dabei die von der zweiten elektrischen Maschine (130) zugeführte elektrische Energie in kinetische Energie wandelt, die dem Antriebssystem (10) zuführbar ist, und
- ein weiterer Teil der von der zweiten elektrischen Maschine (130) bereitgestellten elektrischen Energie der HV-Batterie (120) zugeführt wird, um deren Ladezustand QHVist zu erhöhen.

10. System (100) nach einem der vorhergehenden Ansprüche, **dadurch gekennzeichnet, dass** die Steuerung (190) eingerichtet ist, um das System (100) in einem Hochleistungs-Betriebszustand, in dem das Antriebssystem (10) eine über eine Nennleistung des Verbrennungsmotors (140) hinausgehende Leistung benötigt, derart zu steuern, dass
- die von dem Verbrennungsmotor (140) bereitgestellte kinetische Energie vollständig an das Antriebssystem (10) übertragbar ist,
- eine von der HV-Batterie (120) bereitgestellte elektrische Energie vollständig der ersten elektrischen Maschine (110) zugeführt wird, wobei die erste elektrische Maschine (110) als Elektromotor arbeitet und dabei die von der HV-Batterie (120) zugeführte elektrische Energie in kinetische Energie wandelt, die vollständig dem Antriebssystem (10) zuführbar ist.

11. System (100) nach einem der vorhergehenden Ansprüche, **dadurch gekennzeichnet, dass** die Steuerung (190) eingerichtet ist, um das System (100) in einem Rekuperationsbetrieb derart zu steuern, dass die erste (110) und die zweite elektrische Maschine (130) jeweils als Generator arbeiten, wobei
- eine kinetische Energie zum Antreiben der Generatoren (110, 130) aus dem Antriebssystem (10) des Luftfahrzeugs (1) zuführbar ist,
- die aus dem Antriebssystem (10) zugeführte kinetische Energie von den Generatoren (110, 130) in elektrische Energie gewandelt und bereitgestellt wird,
- die bereitgestellte elektrische Energie der HV-Batterie (120) und/oder der Hauptbatterie (150) zugeführt wird.

12. Verwendung eines Systems (100) nach einem der vorhergehenden Ansprüche zum Bereitstellen von kinetischer Energie für ein Antriebssystem (10) eines Luftfahrzeugs (1).

## Claims

1. System (100) with a plurality of components (110, 120, 130, 140, 150) for providing kinetic energy for a drive system (10) of an aircraft (1), wherein the plurality of components (110, 120, 130, 140, 150) comprises at least:
- a first (110) and second electrical machine (130) which can be operated optionally in each case as a generator or an electric motor,
- an HV battery (120) for providing electrical energy,
- a combustion engine (140) for providing kinetic energy,
wherein
- the first and second electrical machine (110, 130) can each be connected mechanically to the drive system (10) in order to provide kinetic energy to the drive system (10) as needed,
- the second electrical machine (130) is electrically connected to the first electrical machine (110) in order to provide electrical energy to the first electrical machine (110) as needed,
- the second electrical machine (130) is electrically connected to the HV battery (120) in order to transfer electrical energy from the second electrical machine (130) to the HV battery (120) or vice versa as needed,
- the HV battery (120) is electrically connected to the first electrical machine (110),
- the combustion engine (140) can be mechanically connected to the drive system (10) in order to provide kinetic energy to the drive system (10) as needed,
- the combustion engine (140) is mechanically connected to the second electrical machine (130) in order to provide kinetic energy to the second electrical machine (130) as needed,
and wherein
- a control system (190) is provided in order to control flows of kinetic and/or electrical energy between interconnected components (110, 120, 130, 140, 150) of the system (100) in dependence on an operating state of the system (100), wherein the control system (190) is designed to control the system (100) in a first normal operational state, in which a momentary charge state QHVist of the HV battery (120) corresponds at least to a predetermined nominal charge state QHVsoll (QHVist ≥ QHVsoll), such that
- a first portion of the kinetic energy provided by the combustion engine (140) can be transferred to the drive system (10),
- a second portion of the kinetic energy provided by the combustion engine (140) is transferred to the second electrical machine (130),
- the second electrical machine (130) works as a generator and herein converts the kinetic energy transferred from the combustion engine (140) into electrical energy and provides the latter,
wherein
- at least a part of the electrical energy provided by the second electrical machine (130) is supplied to the first electrical machine (110), wherein the first electrical machine (110) works as an electric motor and herein converts the electrical energy supplied by the second electrical machine (130) into kinetic energy, which can be supplied to the drive system (10) **characterized in that**
- the first electrical machine (110) is mechanically connected to a first propeller (11) of the drive system (10) and
- the second electrical machine (130) as well as the combustion engine (140) are connected to a second propeller (12) of the drive system (10).

2. System (100) according to Claim 1, **characterized in that** the plurality of components (110, 120, 130, 140, 150) furthermore comprises a main battery (150) for the supplying of further electrical consumers (20) of the aircraft (1), wherein the main battery (150) is electrically connected to the HV battery (120) and/or the second electrical machine (130) in order to make possible a charging of the main battery (150).

3. System (100) according to Claim 2, **characterized in that** the control system (190) is designed to control the system (100) in a first emergency mode in which one or more components (110, 120, 130, 140, 150) are faulty, such that
- the first (110) and/or the second electrical machine (130) works as an electric motor, and
- the main battery (150) supplies electrical energy to the electrical machine (110, 130) working as an electric motor and the electrical energy supplied by the main battery (150) is converted into kinetic energy in the respective electrical machine (110, 130),
wherein
- each of the electrical machines (110, 130) working as an electric motor can be connected mechanically to the drive system (10) and the respective converted kinetic energy can be supplied by the mechanical connections to the drive system (10).

4. System (100) according to Claim 2 or 3, **characterized in that** the control system (190) is designed to control the system (100) in a second emergency mode with faulty main battery (150) such that an onboard network (20) of the aircraft (1) is supplied with electrical energy from the HV battery (120) and/or with the second electrical machine (130) working as a generator.

5. System (100) according to one of the preceding claims, **characterized in that** the control system (190) is designed to control the system (100) in a third emergency mode with faulty HV battery (120) such that
- a first portion of the kinetic energy provided by the combustion engine (140) can be transferred to the drive system (10),
- a second portion of the kinetic energy provided by the combustion engine (140) is transferred to the second electrical machine (130),
- the second electrical machine (130) works as a generator and herein converts the kinetic energy transferred from the combustion engine (140) into electrical energy and provides the latter,
wherein
- the electrical energy provided by the second electrical machine (130) is supplied to the first electrical machine (110), wherein the first electrical machine (110) works as an electric motor and herein converts the electrical energy supplied by the second electrical machine (130) into kinetic energy, which can be supplied to the drive system (10).

6. System (100) according to one of the preceding claims, **characterized in that** the control system (190) is designed to control the system (100) in a fourth emergency mode with faulty first electrical machine (110) such that the kinetic energy provided by the combustion engine (140) can be transferred entirely to the drive system (10).

7. System (100) according to one of the preceding claims, **characterized in that** the control system (190) is designed to control the system (100) in a fifth emergency mode with faulty second electrical machine (130) such that
- the kinetic energy provided by the combustion engine (140) can be transferred entirely to the drive system (10),
- an electrical energy provided by the HV battery (120) is supplied entirely to the first electrical machine (110), wherein the first electrical machine (110) works as an electric motor and herein converts the electrical energy supplied by the HV battery (120) into kinetic energy, which can be supplied to the drive system (10).

8. System (100) according to one of the preceding claims, **characterized in that** the control system (190) is designed to control the system (100) in a sixth emergency mode with faulty combustion engine (140) such that
- a part of the electrical energy provided by the HV battery (120) is supplied to the first electrical machine (110), wherein the first electrical machine (110) works as an electric motor and herein converts the electrical energy supplied by the HV battery (120) into kinetic energy, which can be supplied to the drive system (10), and
- a further part of the electrical energy provided by the HV battery (120) is supplied to the second electrical machine (130), wherein the second electrical machine (130) works as an electric motor and herein converts the electrical energy supplied by the HV battery (120) into kinetic energy, which can be supplied to the drive system (10) .

9. System (100) according to one of the preceding claims, **characterized in that** the control system (190) is designed to control the system (100) in a second normal operational state, in which a momentary charge state QHVist of the HV battery (120) is lower than a predetermined nominal charge state QHVsoll (QHVist < QHVsoll), such that
- a first portion of the kinetic energy provided by the combustion engine (140) is transferred to the drive system (10),
- a second portion of the kinetic energy provided by the combustion engine (140) is transferred to the second electrical machine (130),
- the second electrical machine (130) works as a generator and herein converts the kinetic energy transferred from the combustion engine (140) into electrical energy and provides the latter,
wherein
- a part of the electrical energy provided by the second electrical machine (130) is supplied to the first electrical machine (110), wherein the first electrical machine (110) works as an electric motor and herein converts the electrical energy supplied by the second electrical machine (130) into kinetic energy, which can be supplied to the drive system (10), and
- another part of the electrical energy provided by the second electrical machine (130) is supplied to the HV battery (120) in order to increase its charge state QHVist.

10. System (100) according to one of the preceding claims, **characterized in that** the control system (190) is designed to control the system (100) in a high-power operational state, in which the drive system (10) requires power above and beyond a power rating of the combustion engine (140), such that
- the kinetic energy provided by the combustion engine (140) can be transferred entirely to the drive system (10),
- an electrical energy provided by the HV battery (120) is supplied entirely to the first electrical machine (110), wherein the first electrical machine (110) works as an electric motor and herein converts the electrical energy supplied by the HV battery (120) into kinetic energy, which can be supplied entirely to the drive system (10).

11. System (100) according to one of the preceding claims, **characterized in that** the control system (190) is designed to control the system (100) in a recuperation mode such that the first (110) and the second electrical machine (130) each work as a generator, wherein
- a kinetic energy can be supplied from the drive system (10) of the aircraft (1) for the driving of the generators (110, 130),
- the kinetic energy supplied from the drive system (10) is converted by the generators (110, 130) into electrical energy and provided,
- the provided electrical energy is supplied to the HV battery (120) and/or the main battery (150).

12. Use of a system (100) according to one of the preceding claims to provide kinetic energy for a drive system (10) of an aircraft (1).

## Revendications

1. Système (100) comprenant une pluralité de composants (110, 120, 130, 140, 150) pour fournir de l'énergie cinétique à un système de propulsion (10) d'un aéronef (1), la pluralité de composants (110, 120, 130, 140, 150) comprenant au moins :
- une première (110) et une deuxième machines électriques (130) aptes chacune à fonctionner au choix en tant que générateur ou en tant que moteur électrique,
- une batterie HT (120) pour fournir de l'énergie électrique,
- un moteur à combustion interne (140) pour fournir de l'énergie cinétique,
dans lequel
- la première et la deuxième machines électriques (110, 130) sont chacune aptes à être reliées mécaniquement au système d'entraînement (10) afin de fournir de l'énergie cinétique au système d'entraînement (10) en fonction des besoins,
- la deuxième machine électrique (130) est connectée électriquement à la première machine électrique (110) pour fournir de l'énergie électrique à la première machine électrique (110) en fonction des besoins,
- la deuxième machine électrique (130) est connectée électriquement à la batterie HT (120) pour transférer de l'énergie électrique en fonction des besoins de la deuxième machine électrique (130) à la batterie HT (120) ou vice versa,
- la batterie HT (120) est connectée électriquement à la première machine électrique (110),
- le moteur à combustion interne (140) est apte à être relié mécaniquement au système d'entraînement (10) afin de fournir de l'énergie cinétique au système d'entraînement (10) en fonction des besoins,
- le moteur à combustion interne (140) est relié mécaniquement à la deuxième machine électrique (130) afin de fournir de l'énergie cinétique à la deuxième machine électrique (130) en fonction des besoins,
et dans lequel
- un moyen de commande (190) est prévu pour commander, en fonction d'un état de fonctionnement du système (100), des flux d'énergie cinétique et/ou électrique entre des composants (110, 120, 130, 140, 150) du système (100) reliés entre eux, le moyen de commande (190) étant agencé pour commander le système (100) dans un premier état de fonctionnement normal, dans lequel un état de charge momentané QHVist de la batterie HT (120) correspond au moins à un état de charge de consigne QHVsoll (QHVist ≥ QHVsoll) prédéfini, de telle sorte que
- une première partie de l'énergie cinétique fournie par le moteur à combustion interne (140) est apte à être transmise au système d'entraînement (10),
- une deuxième partie de l'énergie cinétique fournie par le moteur à combustion interne (140) est transmise à la deuxième machine électrique (130),
- la deuxième machine électrique (130) fonctionne en tant que générateur et transforme ainsi l'énergie cinétique transmise par le moteur à combustion interne (140) en énergie électrique et met celle-ci à disposition,
dans lequel
- au moins une partie de l'énergie électrique fournie par la deuxième machine électrique (130) est amenée à la première machine électrique (110), la première machine électrique (110) fonctionnant en tant que moteur électrique et transformant ainsi l'énergie électrique amenée par la deuxième machine électrique (130) en énergie cinétique qui est apte à être amenée au système d'entraînement (10), **caractérisé en ce que**
- la première machine électrique (110) est reliée mécaniquement à une première hélice (11) du système d'entraînement (10) et
- la deuxième machine électrique (130) ainsi que le moteur à combustion interne (140) sont reliés à une deuxième hélice (12) du système d'entraînement (10).

2. Système (100) selon la revendication 1, **caractérisé en ce que** la pluralité de composants (110, 120, 130, 140, 150) comprend en outre une batterie principale (150) pour alimenter d'autres consommateurs électriques (20) de l'aéronef (1), la batterie principale (150) étant reliée électriquement à la batterie HT (120) et/ou à la deuxième machine électrique (130) pour permettre une recharge de la batterie principale (150).

3. Système (100) selon la revendication 2, **caractérisé en ce que** le moyen de commande (190) est agencé pour commander le système (100), dans un premier mode de fonctionnement d'urgence dans lequel un ou plusieurs des composants (110, 120, 130, 140, 150) fonctionnent de manière défectueuse, de telle sorte que
- la première (110) et/ou la deuxième machine électrique (130) fonctionne(nt) en tant que moteur électrique, et
- la batterie principale (150) fournit de l'énergie électrique à la machine électrique (110, 130) fonctionnant en tant que moteur électrique et l'énergie électrique fournie par la batterie principale (150) est convertie en énergie cinétique dans la machine électrique respective (110, 130),
dans lequel
- chacune des machines électriques (110, 130) fonctionnant en tant que moteur électrique est apte à être reliée mécaniquement au système d'entraînement (10) et l'énergie cinétique respectivement convertie est apte à être amenée au système d'entraînement (10) par les liaisons mécaniques.

4. Système (100) selon la revendication 2 ou 3, **caractérisé en ce que** le moyen de commande (190) est agencé de façon à commander le système (100) dans un deuxième mode de fonctionnement d'urgence avec une batterie principale (150) défectueuse de telle sorte qu'un réseau de bord (20) de l'aéronef (1) est alimenté en énergie électrique à partir de la batterie HT (120) et/ou avec la deuxième machine électrique (130) fonctionnant en tant que générateur.

5. Système (100) selon l'une des revendications précédentes, **caractérisé en ce que** le moyen de commande (190) est agencé pour commander le système (100) dans un troisième mode de fonctionnement d'urgence avec une batterie HT (120) défectueuse de telle sorte que
- une première partie de l'énergie cinétique fournie par le moteur à combustion interne (140) est apte à être transmise au système d'entraînement (10),
- une deuxième partie de l'énergie cinétique fournie par le moteur à combustion interne (140) est transmise à la deuxième machine électrique (130),
- la deuxième machine électrique (130) fonctionne en tant que générateur et transforme ainsi l'énergie cinétique transmise par le moteur à combustion interne (140) en énergie électrique et met celle-ci à disposition,
dans lequel
- l'énergie électrique fournie par la deuxième machine électrique (130) est amenée à la première machine électrique (110), la première machine électrique (110) fonctionnant en tant que moteur électrique et transformant ainsi l'énergie électrique amenée par la deuxième machine électrique (130) en énergie cinétique qui est apte à être amenée au système d'entraînement (10) .

6. Système (100) selon l'une quelconque des revendications précédentes, **caractérisé en ce que** le moyen de commande (190) est agencé de façon à commander le système (100) dans un quatrième mode de fonctionnement d'urgence avec une première machine électrique (110) défectueuse, de telle sorte que l'énergie cinétique fournie par le moteur à combustion interne (140) puisse être entièrement transmise au système de propulsion (10).

7. Système (100) selon l'une quelconque des revendications précédentes, **caractérisé en ce que** le moyen de commande (190) est agencé de façon à commander le système (100) dans un cinquième mode de fonctionnement d'urgence avec une deuxième machine électrique (130) défectueuse de telle sorte que
- l'énergie cinétique fournie par le moteur à combustion interne (140) puisse être entièrement transmise au système d'entraînement (10),
- une énergie électrique fournie par la batterie HT (120) est entièrement transmise à la première machine électrique (110), la première machine électrique (110) fonctionnant en tant que moteur électrique et transformant ainsi l'énergie électrique fournie par la batterie HT (120) en énergie cinétique qui est apte à être transmise au système d'entraînement (10).

8. Système (100) selon l'une quelconque des revendications précédentes, **caractérisé en ce que** le moyen de commande (190) est agencé de façon à commander le système (100) dans un sixième mode de fonctionnement d'urgence avec un moteur à combustion interne défectueux (140) de telle sorte que
- une partie de l'énergie électrique fournie par la batterie HT (120) est fournie à la première machine électrique (110), la première machine électrique (110) fonctionnant en tant que moteur électrique, convertissant ainsi l'énergie électrique fournie par la batterie HT (120) en énergie cinétique qui est apte à être fournie au système d'entraînement (10), et
- une autre partie de l'énergie électrique fournie par la batterie HT (120) est amenée à la deuxième machine électrique (130), la deuxième machine électrique (130) fonctionnant en tant que moteur électrique et transformant ainsi l'énergie électrique fournie par la batterie HT (120) en énergie cinétique qui est apte à être amenée au système d'entraînement (10).

9. Système (100) selon l'une quelconque des revendications précédentes, **caractérisé en ce que** le moyen de commande (190) est agencé de façon à commander le système (100) dans un deuxième état de fonctionnement normal dans lequel un état de charge instantané QHVist de la batterie HT (120) est inférieur à un état de charge de consigne QHVsoll (QHVist < QHVsoll) prédéterminé, de telle manière que
- une première partie de l'énergie cinétique fournie par le moteur à combustion interne (140) est apte à être transmise au système d'entraînement (10),
- une deuxième partie de l'énergie cinétique fournie par le moteur à combustion interne (140) est transmise à la deuxième machine électrique (130),
- la deuxième machine électrique (130) fonctionne en tant que générateur et transforme ainsi l'énergie cinétique transmise par le moteur à combustion interne (140) en énergie électrique et met celle-ci à disposition,
dans lequel
- une partie de l'énergie électrique fournie par la deuxième machine électrique (130) est amenée à la première machine électrique (110), la première machine électrique (110) fonctionnant en tant que moteur électrique et transformant ainsi l'énergie électrique amenée par la deuxième machine électrique (130) en énergie cinétique qui est apte à être amenée au système d'entraînement (10), et
- une autre partie de l'énergie électrique fournie par la deuxième machine électrique (130) est amenée à la batterie HT (120) afin d'augmenter son état de charge QHVist.

10. Système (100) selon l'une des revendications précédentes, **caractérisé en ce que** le moyen de commande (190) est agencé de façon à commander le système (100) dans un état de fonctionnement à haute puissance, dans lequel le système d'entraînement (10) nécessite une puissance supérieure à une puissance nominale du moteur à combustion interne (140), de telle manière que
- l'énergie cinétique fournie par le moteur à combustion interne (140) puisse être entièrement transmise au système d'entraînement (10),
- une énergie électrique fournie par la batterie HT (120) est entièrement amenée à la première machine électrique (110), la première machine électrique (110) fonctionnant en tant que moteur électrique et transformant ainsi l'énergie électrique fournie par la batterie HT (120) en énergie cinétique qui est apte à être entièrement amenée au système d'entraînement (10) .

11. Système (100) selon l'une quelconque des revendications précédentes, **caractérisé en ce que** le moyen de commande (190) est agencé de façon à commander le système (100) dans un mode de récupération de telle sorte que la première (110) et la deuxième (130) machines électriques fonctionnent chacune en tant que générateur, dans lequel
- une énergie cinétique pour l'entraînement des générateurs (110, 130) est apte à être fournie par le système de propulsion (10) de l'aéronef (1),
- l'énergie cinétique fournie par le système d'entraînement (10) est convertie en énergie électrique par les générateurs (110, 130) et est mise à disposition,
- l'énergie électrique fournie est acheminée vers la batterie haute tension (120) et/ou la batterie principale (150).

12. Utilisation d'un système (100) selon l'une des revendications précédentes pour fournir de l'énergie cinétique à un système de propulsion (10) d'un aéronef (1) .
